# EUROPÄISCHE PATENTANMELDUNG

(11) **EP 4 197 671 A1**
(43) Veröffentlichungstag der Anmeldung: **21.06.2023**
(21) Anmeldenummer: 21215750.7
(22) Anmeldetag: 17.12.2021
(51) Int. Cl.: B22F 3/22, B23C 5/00, B22F 5/00, B22F 5/10

(54) **VERFAHREN ZUR HERSTELLUNG EINES WERKZEUGS ODER EINES BEARBEITUNGSAKTIVEN TEILS EINES WERKZEUGS UND NACH DIESEM VERFAHREN HERGESTELLTES WERKZEUG**

(71) Anmelder: Müller, Michael Johannes, 51766 Engelskirchen (DE)
(72) Erfinder: Müller, Michael Johannes, 51766 Engelskirchen (DE)
(74) Vertreter: btb IP Bungartz Baltzer Partnerschaft mbB Patentanwälte

(57) **Zusammenfassung**

Die Erfindung betrifft ein Werkzeug für die spanende Bearbeitung eines Werkstücks und ein Verfahren zur Herstellung dieses Werkzeugs durch Herstellung eines Grünlings in einem Urformverfahren aus Hartmetallpulver und Bindematerial, Einbringen von Konturen und Vorformen des späteren Werkzeugs in den Grünling, Bearbeiten des Grünlings durch gerichtetes oder ungerichtetes spanabhebendes Verfahren. Entbindern und Sintern des entbinderten Grünlings und ggf. eine weitere spanende Bearbeitung durch zumindest ein spanendes Verfahren.

Das bekannte Verfahren soll flexibler und kostengünstiger werden. Dies erreicht die Erfindung dadurch, dass der Grünling im Spritzgussverfahren hergestellt wird, wobei die Konturen und Vorformen im Rahmen des Spritzgussverfahrens durch Formgebung des Spritzgusswerkzeugs hergestellt werden und eine spanende Bearbeitung nach dem Entformen des Grünlings vor dem Entbindern des Grünlings vorgenommen und Grünling anschließend zur Herstellung des Braunlings entbindert und zu Hartmetall gesintert wird.

## Beschreibung

Die Erfindung betrifft ein Verfahren zur Herstellung eines Werkzeugs oder eines bearbeitungsaktiven Teils eines Werkzeugs für die spanende Bearbeitung eines Werkstücks nach dem Oberbegriff des Anspruchs 1. Ferner betrifft die Erfindung ein Werkzeug, das nach einem solchen Verfahren hergestellt ist.

Die gattungsgemäßen Verfahren zeichnen sich insbesondere dadurch aus, dass zunächst in einem Urformverfahren aus Eingangskomponenten ein Grünling hergestellt wird. Die verwendeten Eingangskomponenten umfassen insbesondere zumindest ein Pulver aus Hartmetall und als Bindematerial ein lösliches Matrixmaterial. In den Grünling werden dann im Rahmen des Urformverfahrens und bzw. oder nach dem Urformen Konturen und Vorformen des späteren Werkzeugs eingebracht, wobei diese Vorformen beispielsweise Vorformen für spätere Span-Nuten oder Schneiden sein können.

Der Grünling wird dann durch Entfernen des Bindematerials zur Herstellung eines sogenannten Braunlings entbindert. Dieser entbinderte Braunling wird anschließend gesintert, so dass aus dem Braunling ein Grundkörper des Werkzeugs aus Hartmetall entsteht. Zur Fertigstellung des Werkzeugs bzw. eines bearbeitungsaktiven Teils des Werkzeugs wird dann wenigstens eine spanende Bearbeitung durch ein spanendes Bearbeitungsverfahren, z.B. Schleifen, vorgenommen.

Seit langer Zeit werden Werkzeuge aus Hartmetall hergestellt, die zum Beispiel für die Bearbeitung von Stahl eingesetzt werden. Hartmetalle enthalten dabei einen sogenannten Hartstoff, häufig Wolframcarbid-Kobalt. Für die Bearbeitung von Stahl können in größeren Anteilen andere Carbide oder Mischcarbide, insbesondere Titancarbid, Tantal-Niob-Carbid und Zirkoniumcarbid zugesetzt sein. Diese Hartmetalle weisen eine verbesserte Warmfestigkeit und Oxidationsbeständigkeit und, im Vergleich zu Eisenwerkstoffen, eine bessere Diffusionsbeständigkeit auf und eignen sich daher gut für die spanende Bearbeitung von Stahlwerkstoffen. Die Anwendung der Erfindung ist aber nicht auf diese Hartmetallwerkstoffe beschränkt, auch Hartmetalle mit wenig oder ohne Wolframcarbid, sogenannte Cermets, und andere Hartmetalle können eingesetzt werden.

Das bekannte wie das neue Verfahren umfassen in Wesentlichen die Herstellung des entsprechend der gewünschten Endform des Werkzeugs geformten Grünlings aus einer Mischung aus Granulat und Matrix- oder Bindematerial, das Entbindern zur Herstellung des entbinderten Braunlings aus dem Grünling und das anschließende Sintern des Braunlings zu einem Hartmetallkörper.

Die Erfindung verbessert dieses Verfahren und wird hauptsächlich, aber nicht ausschließlich zur Herstellung von Bohrern, Fräsern oder anderen gerichtet oder ungerichtet spanenden Werkzeugen mit einem von der Bearbeitungsmaschine gehaltenen und angetriebenen Werkzeugkörper, der zumindest mit einem vorderen Bereich nach dem erfindungsgemäßen Verfahren hergestellt ist, eingesetzt.

Der Werkzeugkörper oder bei einem zwei- oder mehrteiligen Werkzeug der vordere Teil des Werkzeugkörpers weist bei den weiterentwickelten Werkzeugen den bearbeitungsaktiven Abschnitt aus Hartmetall, also z.B. die Schneide, unmittelbar auf. Beispiele für solche Werkzeugkörper sind Bohrer oder Fräswerkzeuge, wobei bei allen gattungsgemäßen Werkzeugen die Bearbeitungsbereiche in den angetriebenen Grundkörper oder den vorderen Teil des Verbundes zweier Grundkörper eingearbeitet sind. Hiervon abzugrenzen sind rechteckige oder gerundete Schneidplatten aus Hartmetall, die an einem Werkzeugkörper oder dem vorderen Teil des Werkzeugkörpers befestigt werden.

Ein gattungsgemäßes Verfahren zur Herstellung eines Werkzeugs und ein damit hergestelltes Werkzeug dieser Art sind aus der EP 1 227 901 B1 bekannt. Nach dem dort beschriebenen Verfahren wird ein Bohrer dadurch hergestellt, dass eine Mischung aus einem Polymer und einem Hartmetall- oder Keramikpulver im Rahmen der Extrusion zur Herstellung eines zylindrischen Grundkörpers mit nachfolgender Weiterbearbeitung verwendet wird. Hier wird als Urformverfahren die Extrusion durch eine Düse eingesetzt und ein Grünling aus einem harten Metallpulver und einem polymeren Trägermaterial hergestellt. Anschließend wird der Grünling dann gesintert und gegebenenfalls nach dem Sintern, zum Beispiel durch Schleifen, weiterbearbeitet. Beim Extrudieren der aus den Eingangskomponenten zusammengesetzten Masse durch die Flachdüse wird die Helix-Form für den späteren Spanabfuhrkanal des Bohrers durch Einformen der gewundenen Nuten in den zylindrischen Strang und drehen des Strangs beim Abziehen hergestellt.

Dieses bekannte Verfahren hat den Nachteil, dass zum einen das Abziehen der extrudierten Masse und das Abtrennen des Grünlings relativ aufwändig ist und zum anderen die Herstellung komplexer Formen kaum möglich ist, da die Extrusion prinzipbedingt Beschränkungen der Form des Grünlings mit sich bringt.

Eine Erweiterung des oben genannten Verfahrens ist aus der EP 1 502 721 B2 bekannt. Hier wird nach dem Extrudieren über einen Meißel der Spanabfuhrkanal durch eine spanende Bearbeitung hergestellt. Auch diese Weiterbildung des bekannten Verfahrens leidet aber unter den oben genannten Nachteilen.

Ein weiteres Verfahren ist aus der EP 2 424 710 B1 bekannt. Bei diesem Verfahren wird ebenfalls eine Mischung aus Polymer und Hartmetallpulver zur Bildung eines Grünlings aus einer Flachdüse herausextrudiert. In zusammengefahrenen Zustand einer Form wird bei diesem Verfahren zunächst ein massiver oder hohler Schaftbereich im Spritzgussverfahren hergestellt. Hierzu wird das Material in eine Hülse in einer der Formhälften hineinextrudiert, dann wird die Form geöffnet, so dass sich ein frei aus der Düse heraushängender Strang bilden kann, in dem ebenfalls ein spanabführender Außenbereich in der typischen Helixform eines Bohrers und auch Kühlkanäle vorgesehen sein können. Kühlkanäle werden durch in den Austrittskanal des Polymer-/Hartmetallmaterialgemischs eingelegte Stifte beim Extrudieren geformt. Auch bei diesem Verfahren ist die Prozessführung aufwändig und eine komplexe Form des Grünlings nur schwer herstellbar.

Aufgabe der Erfindung ist es daher, ein Verfahren zur Herstellung eines Werkzeugs sowie ein damit hergestelltes Werkzeug zu schaffen, das bei günstigen Verfahrenskosten die einfache Herstellung auch komplexer Formen des Werkzeugs ermöglicht.

Eine weitere Aufgabe der Erfindung besteht darin, ein Werkzeug oder einen bearbeitungsaktiven vorderen Teil eines Werkzeugs mit möglichst günstigen Eigenschaften hinsichtlich Form und Festigkeit zu schaffen.

Die beiden Aufgaben werden nach der Erfindung durch ein Verfahren nach Anspruch 1 und bezüglich des Werkzeugs durch ein Werkzeug nach Anspruch 14 gelöst. Das erfindungsgemäß fortentwickelte Verfahren zeichnet sich dadurch aus, dass der Grünling im Spritzgussverfahren mit Einspritzen eines Gemischs der Eingangskomponenten in ein von einer hohlen Form gebildetes Spritzgusswerkzeug unter Druck hergestellt wird. Die Konturen und Vorformen werden dabei zumindest teilweise im Rahmen des Spritzgussverfahrens durch Formgebung des Spritzgusswerkzeugs hergestellt.

Anschließend kann nach dem Entformen des Grünlings aus dem Spritzgusswerkzeug und vor dem Entbindern des Grünlings eine spanende Bearbeitung oder eine sonstige Bearbeitung, insbesondere zur ergänzenden Formgebung, durchgeführt werden. Der so bearbeitete Grünling wird dann anschließend zur Herstellung eines Braunlings entbindert. Im nachfolgenden Sinterverfahren wird dann aus dem entbinderten Braunling ein Werkstück aus Hartmetall hergestellt, das nochmals einer Nachbehandlung mit einem oder mehreren Schritten unterzogen werden kann, wobei die Nachbehandlung insbesondere ein Schleifen oder Beschichten umfassen können.

Mit dem erfindungsgemäßen Verfahren können nun auf besonders einfache Weise auch komplexe Formen des Werkzeugs hergestellt werden. Als Werkzeug kommen hier insbesondere Bohrer, Fräswerkzeuge mit am Grundkörper ausgebildeten Schneidkanten und ähnliche Werkzeuge in Betracht. Während bei den bekannten Verfahren als Urformverfahren zum Herstellen des Grünlings ein Extrusionsverfahren eingesetzt wird, erfolgt nun die Herstellung des Grünlings im Rahmen des Spritzgussverfahrens, bei dem die aus den Eingangskomponenten gebildete Masse (Feedstock) in eine Form gespritzt wird, um so den Grundkörper des Werkzeugs im Spritzguss herzustellen. Der Spritzguss ermöglicht dabei eine wesentlich größere Formenvielfalt als die Extrusion durch eine Düse.

Durch die Herstellung des Grünlings im Spritzgussverfahren unter Verwendung einer hohlen Form, in die die Masse aus den Eingangskomponenten (Feedstock) eingespritzt wird, können Konturen und Vorformen bereits durch die Formgebung der Innenkontur des Spritzgusswerkzeugs und gegebenenfalls durch das Einlegen von Kernen in die Form hergestellt werden. Hierdurch entfällt zum einen das Ablängen der durch die Düse extrudierten Stränge und zum anderen ein Drehen des Strangs, zum Beispiel zum Erzeugen von gewendelten Spanabführkanälen eines Bohrers. Auch die Herstellung von Kühlkanälen und ähnlicher Geometrien wird, wie nachfolgend noch beschrieben werden wird, wesentlich einfacher.

Nachdem der Grünling im Spritzgussverfahren hergestellt und aus dem Werkzeug entformt wurde, erfolgt die Weiterverarbeitung, die sich in Teilen nicht von dem bekannten Verfahren unterscheidet. Zunächst kann der Grünling, der noch gut bearbeitbar ist, weiteren, insbesondere spanenden Bearbeitungsschritten unterzogen werden. Im Rahmen der Bearbeitung des Grünlings können auch zusätzliche Kanäle in den Grünling eingebracht oder Konturen eingeformt oder nachgeformt werden.

So kann in diesem Verfahrensstadium zum Beispiel die Schneidengeometrie einer Schneide des Werkzeugs vorgeformt werden, ein gewendelter Spanabfuhrkanal in der seitlichen Mantelfläche eingeformt oder klarer herauskonturiert werden oder auch ein durch Einlegen eines Kerns entstandener Hohlraum über Bohrungen von der Seite oder der Spitze des Werkzeugs zugänglich gemacht werden. Der Grünling kann über übliche spanende Bearbeitungsverfahren, insbesondere durch Bohren, Fräsen oder auch durch Drehen bzw. Drexeln bearbeitet werden. Kanäle und Löcher können auch mittels Nadeln eingestochen werden.

Nachdem der Grünling in der gewünschten Form hergestellt ist, wird in einem Schritt des Entbinderns das als Bindematerial eingesetzte Matrixmaterial dem Grünling entzogen. Dies kann thermisch, katalytisch und durch Lösemittel oder durch Anwendung einer Kombination bzw. Abfolge der genannten Entbinderungsmethoden erfolgen. (Einstufiges bzw. mehrstufiges Entbindern). Ein geeignetes Matrixmaterial kann zum Beispiel wasserlöslich sein, so dass es aus dem Grünling ausgewaschen werden kann. Auf diese Weise entsteht aus dem Grünling ein sogenannter Braunling, also ein Grundkörper aus dem Hartmetallpulver, der, da ihm das Matrixmaterial entzogen wurde, porös und leicht zerbrechlich ist. Dieser Braunling wird dann gesintert, wobei durch den Sinterprozess der Grundkörper des Werkzeugs aus Hartmetall hergestellt wird.

Der mit den oben genannten Schritten gefertigte Grundkörper aus Hartmetall wird in den meisten Fällen anschließend nochmals bearbeitet werden. Diese Bearbeitung kann zum Beispiel darin bestehen, dass der Grundkörper ganz oder teilweise beschichtet wird. Ferner wird in den meisten Fällen der Grundkörper nochmals spanend bearbeitet werden. Unter spannender Bearbeitung im Sinne der Bearbeitung des Grundkörpers, aber auch im Sinne der übrigen Bearbeitungsschritte ist hier sowohl eine gerichtete spanabhebende Bearbeitung (Bohren, Fräsen etc.) als auch eine ungerichtete spanabhebende Bearbeitung (Schleifen, Polieren) zu verstehen. Diese weitere Bearbeitung des Grundkörpers kann vor und bzw. oder nach einer eventuellen Beschichtung vorgenommen werden. Natürlich ist eine Beschichtung nicht notwendigerweise erforderlich. Das verwendete Hartmetall hat aber den Vorzug, dass aufgrund der Oberflächenbeschaffenheit und der damit verbundenen Rauhtiefe des Sintermetalls eine Beschichtung besonders gut an dem Grundkörper haftet.

Die Verwendung des Spritzgussverfahrens mit dem Einspritzen von Metall-Pulver mit Kunststoffträgermaterial in eine geschlossene Form (Powder-Injection-Molding [PIM]) ermöglicht es besonders leicht, zusätzlich zu der Formung der äußeren Mantelfläche des Grünlings Hohlräume im Grünling vorzusehen. Hierzu können, wie beim bekannten Kunststoffspritzguss, Kerne eingesetzt werden, die während des Spritzgießen oder nach dem Spritzguss, insbesondere beim Öffnen der Spritzgussform, gezogen oder ausgedreht werden. Auf diese Weise kann zum Beispiel ein einseitig offener Hohlraum mit glatter Innenwandung oder mit konturierter Wandung erzeugt werden. Der Kern wird dann vor der Bearbeitung des Grünlings oder auch nach der Bearbeitung des entformten Grünlings entfernt, insbesondere gezogen oder aus dem Grünling herausgedreht.

Das Belassen des Kerns im Grünling während eines Bearbeitungsschrittes nach dem Entformen dient dabei der Vermeidung einer Verformung des Grünlings infolge des Drucks des Werkzeugs bei der Bearbeitung. Über eingelegte Kerne können so auch komplexe Geometrien und Hinterschnitte im Spritzguss realisiert werden.

Schließlich wäre es auch möglich, Kerne aus einem Opfermaterial einzulegen, die später nicht gezogen werden, sondern, nachdem sie mit dem Feedstock umspritzt worden sind, beim nachfolgenden einstufigen oder mehrstufigen Entbindern aufgelöst werden. Das Belassen des Kerns im Grünling während eines Bearbeitungsschrittes nach dem Entformen dient dabei vorzugsweise der Vermeidung einer Verformung des Grünlings infolge des Drucks des Werkzeugs bei der nachfolgenden Bearbeitung des Grünlings. Durch Einlegeteile können insbesondere komplexe Geometrien und Hinterschnitte im Spritzguss realisiert werden.

Bevorzugte Anwendungen der Kerne oder Einlegeteile aus einem später aufzulösenden Opfermaterial können Kanäle sein, durch die beispielsweise Kühlwasser oder Druckluft zur Schneide oder einem sonstigen Arbeitsbereich des Werkzeugs geführt werden kann. Hier sind natürlich viele Kombination der Formgebung durch das Einlegen von nach der Herstellung des Grünlings zu entfernenden Kernen, durch Einlegeteile aus dem Opfermaterial und durch insbesondere spanende Bearbeitung des Grünlings nach dem Entformen aus der Spritzgussform vor oder nach dem Entfernen des Kerns oder dem Auflösen des Opfermaterials möglich. Hierdurch lässt sich im Vergleich zu einem Extrusionsverfahren eine sehr viel größere Formenvielfalt erzielen.

Ein als sogenannter Opferkörper zu umspritzendes Einlegeteil, das dann nach dem Herausnehmen des Grünlings aus der Spritzgussform aufgelöst werden kann bietet sich, wie oben erwähnt, insbesondere zur Herstellung von langgezogenen Kanälen für Kühlwasser oder Druckluft an. Hierzu ist der Opferkörper dann röhrchen- oder fadenförmig ausgebildet. Nach Auflösung des Opferkörpers entsteht so ein kanalartiger Hohlraum mit einer glatten oder konturierten Innenwandung, indem die Außenwandung des Opferkörpers entsprechend geformt ist.

Gemäß der Erfindung wird insbesondere der bearbeitungsaktive Teil eines Werkzeugs nach dem oben beschriebenen Verfahren hergestellt. Natürlich kann auch das vollständige Werkzeug auf diese Weise hergestellt werden. Vorteilhaft kann es aber auch sein, wenn das Werkzeug mehrteilig ausgebildet ist. So kann zum Beispiel der Schaft aus einem klassischen Werkzeugstahl gefertigt werden, während ein vorderer Teil des Werkzeugs als bearbeitungsaktiver Teil aus Hartmetall auf diesen Schaft aufgeschraubt wird oder in sonstiger Weise mit ihm verbunden wird. Dies hat den Vorteil, dass bei Verschleiß des Werkzeugs der Schaft weiterverwendet werden kann oder dass bei Entsorgung des vollständigen Werkzeugs die Materialien voneinander getrennt entsorgt werden können. Natürlich kann der nicht aus gesintertem Hartmetall bestehende Teil des Werkzeugs auch aus anderen, geeigneten Materialien gefertigt sein. Je nach Einsatzzweck und Gestaltung können die beiden Teile entweder gleich lang sein oder auch eine unterschiedliche Länge aufweisen.

Eine weitere vorteilhafte Weiterbildung des Verfahrens besteht darin, dass zwei oder mehr Werkzeugkomponenten, zum Beispiel der bearbeitungsaktive Teil und der Schaft, zunächst separat als Grünling vorgefertigt werden. Diese Teile können zunächst im oben beschriebenen Spritzgussverfahren, insbesondere aus einem identischen Feedstock-Material als (Teil-)Grünlinge hergestellt werden. Anschließend werden diese beiden (Teil-)Grünlinge dann formschlüssig, kraftschlüssig oder in einer Kombination aus Form- und Kraftschluss miteinander verbunden. Dieses aus zwei Grünlingen hergestellte Verbundteil bildet dann den Grünling des eingangs beschriebenen Verfahrens, der nach dem Verbinden der (Teil-)Grünlinge wie oben beschrieben entbindert und dann als Braunling gesintert wird. Im Sintervorgang entsteht dann eine nahezu unlösbare Verbindung zu einem Hartmetallkörper für das spätere Werkzeug.

Nach dem oben beschriebenen Verfahren können nicht nur bearbeitungsaktiver Teil und Schaft als separate Grünlinge hergestellt werden, die später zu dem das Eingangsprodukt des Entbinderungschrittes bildenden Grünling zusammengefügt werden, es können auch andere Bereich des späteren Werkzeugs in solchen Teilschritten des Spritzgießens vorproduziert werden. Auch dies ist ein großer Vorteil des erfindungsgemäßen Verfahrens im Vergleich zu den bekannten Extrusionsverfahren. So kann die Herstellung komplexer Hohlräume ergänzend oder alternativ zu dem Einlegen der oben beschriebenen Kerne oder Einlegeteilen aus Opfermaterial auch durch Herstellung von Teilen der Form erzeugt werden, die dann vor dem Entbindern zusammengefügt werden. Hier sollte bevorzugt das Zusammenfügen und die geforderte spätere Festigkeit des Werkzeugs durch geeignete Formgebung, insbesondere zur Herstellung einer Hinterschnitte oder einer, ein sonstiges Ineinandergreifen der Bauteil ermöglichende Form aufweisenden Gestaltung der einzelnen (Teil-)Grünlinge berücksichtigt werden.

Der bearbeitungsaktive Teil des Werkzeugs ist bei der zweiteiligen Ausgestaltung bevorzugt auf den hinteren Teil aufgeschraubt. Das Gewinde kann ein übliches Schraubgewinde sein.

Bei einer möglichen Ausgestaltung des zweiteiligen Werkzeugs sind zum Beispiel der bearbeitungsaktive, vordere Teil und der Schaft über eine Verschraubung miteinander verbunden. So kann im bearbeitungsaktiven Teil im rückwärtigen Bereich ein Innengewinde vorgesehen, in das der Schaft mit einem Außengewinde einschraubbar ist oder umgekehrt kann das Außengewinde im bearbeitungsaktiven Teil und das Innengewinde im Schaft vorgesehen sein. Das Gewinde kann einen oder mehrere Gänge aufweisen.

Zur Herstellung der Gewinde der Verschraubung kann in die Spritzgussform für die Herstellung des Grünlings ein ausschraubbarer Kern (Ausdrehwerkzeug) verwendet werden. Auch ist die Schaffung von Hinterschnitten mit einem Faltkern oder dem oben beschriebenen Einlegeteil aus beim Entbindern aufzulösenden Opfermaterial möglich. Sofern das bearbeitungsaktive, aus Hartmetall gefertigte vordere Teil des Werkzeugs ohne weitere Einlegeteile unmittelbar auf einen metallischen Schaft geschraubt werden soll, hat sich als besonders vorteilhaft erwiesen, aufgrund der Kombination der Materialien und aufgrund des linearen Schrumpfverhaltens des Grünlings ein Gleit- oder Rundgewinde zu verwenden.

Weitere Merkmale und Vorteile der Erfindung ergeben sich der nachfolgenden Beschreibung bevorzugter Ausführungsbeispiele anhand der Zeichnungen.

In den Zeichnungen zeigt:
- Fig. 1: ein nach einem erfindungsgemäßen Verfahren hergestelltes Werkzeug,
- Fig. 2: das Werkzeug aus Figur 1 in einer Schnittansicht (Schnitt A-A in Figur 1),
- Fig. 3: den bearbeitungsaktiven Teil des Werkzeugs in einer dreidimensionalen Darstellung,
- Fig. 4: den bearbeitungsaktiven Teil des Werkzeugs aus Figur 3 in einer Seitenansicht
- Fig. 5: den bearbeitungsaktiven Teil des Werkzeugs aus den Figuren 3 und 4 in einer Schnittansicht (Schnitt B-B in Figur 4),
- Fig. 6: den Schaft des in den Figuren 1 und 2 dargestellten Werkzeugs in einer dreidimensionalen Ansicht und
- Fig. 7: den in Figur 6 dargestellten Schaft in einer Seitenansicht.

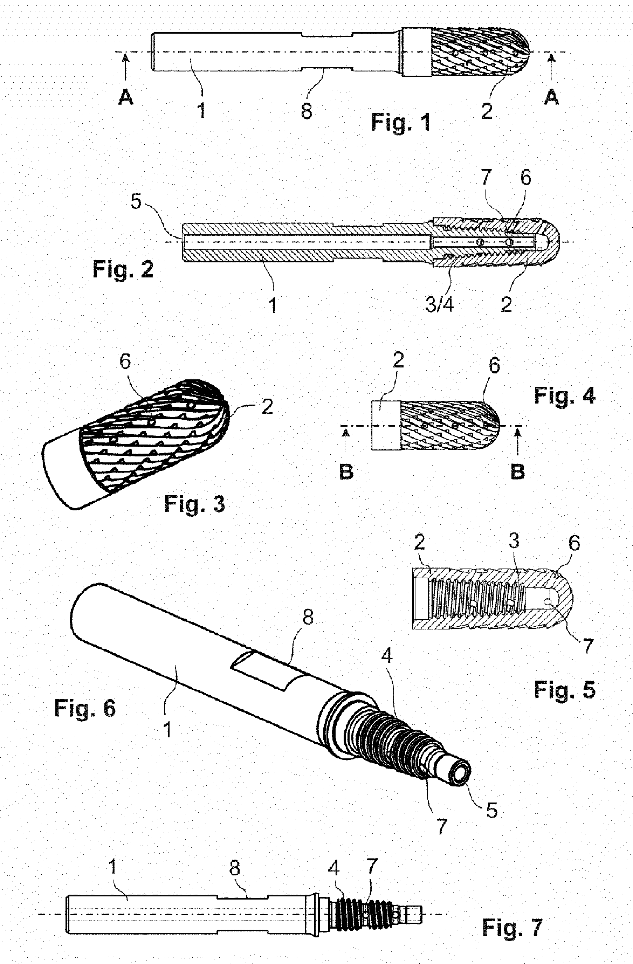

In Figur 1 ist ein Werkzeug dargestellt, das nach dem erfindungsgemäßen Verfahren hergestellt wurde. Das Werkzeug ist hier zweiteilig ausgebildet und weist einen bearbeitungsaktiven Teil 2 auf, der auf einen Schaft 1 aufgeschraubt ist. Der Schaft 1 besteht aus einem metallischen Werkstoff, insbesondere aus Stahl oder Edelstahl und wurde in konventioneller Weise durch die klassischen Metallbearbeitungsverfahren hergestellt. Zum Halten des Schaftes 1 über einen Maulschlüssel ist im zylindrischen Grundkörper des Schaftes 1 eine Abflachung 8 vorgesehen, über die das Werkzeug, das hier als Senkfräskopf ausgebildet ist, drehgesichert gehalten werden kann.

Der bearbeitungsaktive Teil 2 ist nach dem erfindungsgemäßen Verfahren als Hartmetall-Bauteil gefertigt worden. Der Teil 2 weist gewundene Schneidkanten auf, zwischen denen Kanäle 6 von innen nach außen verlaufen, durch die beispielsweise Spül- und/oder Kühlflüssigkeit in die Bohrung an die Kontaktstellen der Schneidkanten mit dem zu bearbeitenden Werkstück eingebracht werden kann.

In Figur 2 ist das Werkzeug aus Figur 1 in einer Seitenansicht im Schnitt (Schnitt A-A in Figur 1) dargestellt. Zu erkennen ist hier, dass der Schaft 1 ebenfalls einen mittigen Kühlkanal 5 aufweist, der in Strömungsverbindung mit den Kanälen 6 im bearbeitungsaktiven Teil 2 des Werkzeugs steht. Der bearbeitungsaktive Teil 2 des Werkzeugs ist über eine Schraubverbindung, die von einem konischen Außengewinde 4 des Kopfes des Schaftes 1 und einem in seiner Form an das konische Außengewinde 4 angepassten Innengewinde 3 gebildet ist. Das Gewinde ist hier als Rundgewinde ausgebildet.

Die Figuren 3,4 und 5 zeigen den bearbeitungsaktiven Teil 2 des Werkzeugs in vergrößerter Darstellung bzw. als Einzelteildarstellung. In Figur 3 sind die Schneidkanten, die nach dem Herstellen des Grünlings nochmals durch Schleifen bearbeitet wurden, gut erkennbar. In der in Figur 5 dargestellten Schnittansicht gemäß der Schnittlinie B-B in Figur 4 ist die Gewindepaarung und die Anordnung der Kühlmittelkanäle zu erkennen.

Die Figuren 6 und 7 wiederum zeigen in einer Einzelteildarstellung den Schaft 1, wobei Figur 6 eine dreidimensionale Darstellung und Figur 7 eine Seitenansicht ist. Zu erkennen ist, dass der Schaft 1 im Bereich seines Außengewindes 4 Kühlmittelaustrittsöffnungen 7 aufweist, durch die Kühlmittel in die Kanäle 6 im bearbeitungsaktiven Teil 2 des Werkzeugs strömen kann. Im vorderen Bereich ist der Kühlkanal 5 offen, so dass auch hierüber Spül- oder Kühlflüssigkeit durch bearbeitungsaktiven Teil 2 der Bohrfläche zugeführt werden kann. Die Kanäle 6 können je nach Einsatzzweck und Bedarf zur Zufuhr von Kühlflüssigkeit, zur Zufuhr von Spülflüssigkeit für das Abführen von Spänen oder auch für Kühlluft verwendet werden.

Der besondere Vorteil des erfindungsgemäßen Verfahrens liegt darin, dass durch die Herstellung und Bearbeitung zumindest des bearbeitungsaktiven Teils 2 des Werkzeugs im Spritzgussverfahren die Kanäle 6 zur Bildung der Kühlkanäle ebenso wie das Innengewinde 3 leicht hergestellt werden kann. Insbesondere der für die Schaffung des Innengewindes 3 notwendige Hohlraum kann durch einen ausdrehbaren (spindelbaren) Kern, der vor dem Einspritzen des Feedstocks in die Spritzgussform eingelegt wird, hergestellt werden. Der Kern kann ein Ausdrehkern oder ein Zugkern sein, der Teil einer Kernseite der Spritzgussform ist und beim Öffnen der Formhälften (Kernseite und Schalenseite) durch Ausdrehen oder eine Zugbewegung entformt wird und den Hohlraum oder Gewinde im Formteil freigibt. Bei Herstellung des Grünlings kann so das Gewinde frühzeitig vorgeformt oder bereits endgültig geformt werden.

Die Kanäle 6 können ebenfalls über Kerne hergestellt werden, hier bietet sich jedoch in den meisten Fällen eine Bearbeitung des Grünlings nach dem Entformen an, in dem zum Beispiel die Bohrungen für die Kanäle 6 im klassischen Bohrverfahren in den entformten Grünling eingebracht werden. Alternativ bietet sich insbesondere bei längeren Kanälen 6 die Verwendung eines Opfermaterials an, das beim Entbindern des Grünlings zusammen mit dem Matrixmaterial oder in einem separaten Schritt aufgelöst werden kann.

Zusammenfassend gestattet das erfindungsgemäße Verfahren eine komplexe Formgebung ohne großen Herstellungsaufwand, insbesondere bereits bei Herstellung des Grünlings, und reduziert so den Aufwand für die Nachbearbeitung und damit für die Herstellung des Werkzeugs. Durch die Zweiteilung des Werkzeugs kann der Schaft 1 bei Verschleiß des bearbeitungsaktiven Teils 2 des Werkzeugs wiederverwendet und aus einem leicht entsorgbaren Material gefertigt werden.

Die Schneiden des bearbeitungsaktiven Teils 2 des Werkzeugs können nach Entformen des Grünlings geschärft werden, hier bietet sich ein Schleifen nach dem Entbindern und bzw. oder nach dem Sintern des Grünlings, also des fertiggestellten Grundkörpers aus Hartmetall, an.

### Bezugszeichenliste:

- 1: Schaft
- 2: Bearbeitungsaktiver Teil des Werkzeugs
- 3: Innengewinde des bearbeitungsaktiven Teils 2 des Werkzeugs
- 4: Außengewinde des Schafts
- 5: Kühlkanal im Schaft
- 6: Kanal im bearbeitungsaktiven Teil 2 des Werkzeugs
- 7: Kühlmittelaustrittöffnung im Gewindebereich des Schafts
- 8: Abflachung für Maulschlüssel

## Patentansprüche

1. Verfahren zur Herstellung eines Werkzeugs oder eines bearbeitungsaktiven Teils (2) eines Werkzeugs für die spanende Bearbeitung eines Werkstücks, wobei
• zunächst in einem Urformverfahren aus Eingangskomponenten, die zumindest ein Pulver aus Hartmetall und als Bindematerial ein lösliches Matrixmaterial umfassen, ein Feedstock zusammengestellt und daraus ein Grünling hergestellt wird,
• in den Grünling im Rahmen des Urformverfahrens und/oder nach dem Urformen Konturen und Vorformen des späteren Werkzeugs, insbesondere für Spannuten oder Schneiden, eingebracht werden,
• der Grünling dann durch Entfernen des Bindematerials zur Herstellung eines Braunlings entbindert wird,
• der entbinderte Braunling gesintert wird und
• zur Herstellung des Werkzeugs oder des bearbeitungsaktiven Teils (2) des Werkzeugs wenigstens eine spanende Bearbeitung durch zumindest ein spanendes Verfahren erfolgt,
**dadurch gekennzeichnet, dass**
der Grünling im Spritzgussverfahren mit Einspritzen eines Gemischs der Eingangskomponenten in ein von einer hohlen Form gebildetes Spritzgusswerkzeug unter Druck hergestellt wird, wobei
• die Konturen und Vorformen zumindest teilweise im Rahmen des Spritzgussverfahrens durch Formgebung des Spritzgusswerkzeugs hergestellt werden,
• eine spanende Bearbeitung nach dem Entformen des Grünlings aus dem Spritzgusswerkzeug und vor dem Entbindern des Grünlings vorgenommen wird und der so bearbeitete Grünling anschließend zur Herstellung des Braunlings entbindert und danach zu Hartmetall gesintert wird.

2. Verfahren zur Herstellung eines Werkzeugs oder eines bearbeitungsaktiven Teils (2) eines Werkzeugs nach Anspruch 1, **dadurch gekennzeichnet, dass** nach dem Sintern des Braunlings weitere spanende Bearbeitungen, insbesondere in Form des Schleifens des aus dem Braunling hergestellten Hartmetallteils vorgenommen werden.

3. Verfahren zur Herstellung eines Werkzeugs oder eines bearbeitungsaktiven Teils (2) eines Werkzeugs nach einem der beiden vorhergehenden Ansprüche, **dadurch gekennzeichnet, dass** die spanende Bearbeitung des Grünlings das Schleifen des Grünlings, das Fräsen und/oder das Einbringen von Bohrungen in den Grünling umfasst.

4. Verfahren zur Herstellung eines Werkzeugs oder eines bearbeitungsaktiven Teils (2) eines Werkzeugs nach einem der vorhergehenden Ansprüche, **dadurch gekennzeichnet, dass** das aus dem Braunling gesinterte Hartmetallteil vor oder gegebenenfalls nach einer spanenden Bearbeitung mit einer Beschichtung versehen wird.

5. Verfahren zur Herstellung eines Werkzeugs oder eines bearbeitungsaktiven Teils (2) eines Werkzeugs nach einem der vorhergehenden Ansprüche, **dadurch gekennzeichnet, dass** im Rahmen des Urformverfahrens in den Grünling zumindest einseitig an einer hinteren Seite des Werkzeugs oder des bearbeitungsaktiven Teils eines Werkzeugs wenigstens ein offener Hohlraum mit glatter Wandung und/oder mit Innenkonturen eingebracht wird.

6. Verfahren zur Herstellung eines Werkzeugs oder eines bearbeitungsaktiven Teils (2) eines Werkzeugs nach dem vorhergehenden Anspruch, **dadurch gekennzeichnet, dass** das Einbringen des Hohlraums durch einen, in dem Spritzgusswerkzeug vorgesehen und nach dem Spritzgießen ausdrehbaren oder ziehbaren Formkern erfolgt.

7. Verfahren zur Herstellung eines Werkzeugs oder eines bearbeitungsaktiven Teils (2) eines Werkzeugs nach einem der vorhergehenden Ansprüche, **dadurch gekennzeichnet, dass** im Rahmen des Urformverfahrens in den Grünling zumindest ein, sich bis zu einem seitlichen Bereich oder zu einem vorderen Bearbeitungsbereich erstreckender Kanal (6) durch einen in der Spritzgussform vorgesehen Formkern mit nachfolgenden Umspritzen und anschließendem Ziehen oder Herausdrehen des Kerns vor oder beim Entformen des Grünlings aus der Spritzgussform eingebracht wird.

8. Verfahren zur Herstellung eines Werkzeugs oder eines bearbeitungsaktiven Teils (2) eines Werkzeugs nach einem der vorhergehenden Ansprüche, **dadurch gekennzeichnet, dass** im Rahmen des Urformverfahrens in den Grünling zumindest ein, sich bis zu einem seitlichen Bereich oder zu einem vordere Bearbeitungsbereich oder nur in den inneren Bereich des Grünlings erstreckender, röhrchen- oder fadenförmiger Opferkörper eingelegt wird, wobei nach dem Entformen des Grünlings aus dem Spritzgusswerkzeug der Opferkörper im Rahmen des Entbinderns oder des Sinterns des Braunlings aufgelöst und so zur Bildung eines Kanals (6) oder Hohlraums entfernt wird.

9. Verfahren zur Herstellung eines Werkzeugs oder eines bearbeitungsaktiven Teils (2) eines Werkzeugs nach einem der drei vorhergehenden Ansprüche, **dadurch gekennzeichnet, dass** der Kanal (6) eine glatte Wandung oder eine Wandung mit Innenkonturen aufweist.

10. Verfahren zur Herstellung eines Werkzeugs oder eines bearbeitungsaktiven Teils (2) eines Werkzeugs nach einem der vorhergehenden Ansprüche, **dadurch gekennzeichnet, dass** in den Grünling vor dem Entbindern Bohrungen zur Bildung von Kanälen (6), insbesondere von Kühlkanälen, Pressluftkanälen oder Spanabfuhrkanälen, eingebracht werden.

11. Verfahren zur Herstellung eines Werkzeugs unter Anwendung eines Verfahrens eines bearbeitungsaktiven Teils (2) eines Werkzeugs nach einem der vorhergehenden Ansprüche, **dadurch gekennzeichnet, dass** zur Herstellung eines zwei- oder mehrteiligen Werkzeugs ein Schaft (1) aus einem ersten Material, insbesondere einem metallischen Material hergestellt wird und der bearbeitungsaktive Teil (2) des Werkzeugs mit dem Schaft (1) fest oder lösbar verbunden wird.

12. Verfahren zur Herstellung eines Werkzeugs unter Anwendung eines Verfahrens eines bearbeitungsaktiven Teils (2) eines Werkzeugs nach dem vorhergehenden Anspruch, **dadurch gekennzeichnet, dass** der Schaft (1) mit dem bearbeitungsaktiven Teil des Werkzeugs verschraubt wird, wobei hierzu ein Schaft (1) mit einem Innen- bzw. Außengewinde (4) und ein bearbeitungsaktiver Teil (2) des Werkzeugs mit einem Außen- bzw. einem Innengewinde (3) verwendet wird.

13. Verfahren zur Herstellung eines Werkzeugs oder eines bearbeitungsaktiven Teils (2) eines Werkzeugs nach dem vorhergehenden Anspruch, **dadurch gekennzeichnet, dass** die von dem Innengewinde (3) und dem Außengewinde (4) gebildete Gewindepaarung ein Gleitgewinde ist.

14. Verfahren zur Herstellung eines Werkzeugs oder eines bearbeitungsaktiven Teils (2) eines Werkzeugs nach einem der vorhergehenden Ansprüche, **dadurch gekennzeichnet, dass** der Grünling aus Teilgrünlingen zu einem Körper nach dem Spritzgießen zusammengesetzt wird, wobei zunächst zumindest zwei Teilgrünlinge im Spritzgussverfahren hergestellt werden, beide Teilgrünlinge vor dem Entbindern im Grünling-Zustand kraft- und/oder formschlüssig miteinander zu dem Grünling verbunden und anschließend der aus den Teilgrünlingen zusammengefügte Grünling entbindert und gesintert wird und wobei insbesondere ein Teilgrünling den späteren Schaft und ein Teilgrünling den bearbeitungsaktiven Teil des Werkzeugs bilden, die vor dem Entbindern insbesondere durch eine Schraubverbindung miteinander verbunden werden.

15. Werkzeug, **dadurch gekennzeichnet, dass** es nach einem Verfahren nach einem der vorhergehenden Ansprüche hergestellt ist.

## Geänderte Patentansprüche

### Geänderte Patentansprüche gemäss Regel 137(2) EPÜ.

1. Verfahren zur Herstellung eines Werkzeugs oder eines bearbeitungsaktiven Teils (2) eines Werkzeugs für die spanende Bearbeitung eines Werkstücks, wobei
• zunächst in einem Urformverfahren aus Eingangskomponenten, die zumindest ein Pulver aus Hartmetall und als Bindematerial ein lösliches Matrixmaterial umfassen, ein Feedstock zusammengestellt und daraus ein Grünling hergestellt wird,
• in den Grünling im Rahmen des Urformverfahrens und/oder nach dem Urformen Konturen und Vorformen des späteren Werkzeugs, insbesondere für Spannuten oder Schneiden, eingebracht werden,
• der Grünling dann durch Entfernen des Bindematerials zur Herstellung eines Braunlings entbindert wird,
• der entbinderte Braunling gesintert wird und
• zur Herstellung des Werkzeugs oder des bearbeitungsaktiven Teils (2) des Werkzeugs wenigstens eine spanende Bearbeitung durch zumindest ein spanendes Verfahren erfolgt, wobei
• der Grünling im Spritzgussverfahren mit Einspritzen eines Gemischs der Eingangskomponenten in ein von einer hohlen Form gebildetes Spritzgusswerkzeug unter Druck hergestellt wird, und
• die Konturen und Vorformen zumindest teilweise im Rahmen des Spritzgussverfahrens durch Formgebung des Spritzgusswerkzeugs hergestellt werden,
**dadurch gekennzeichnet, dass**
eine spanende Bearbeitung nach dem Entformen des Grünlings aus dem Spritzgusswerkzeug und vor dem Entbindern des Grünlings vorgenommen wird und der so bearbeitete Grünling anschließend zur Herstellung des Bräunlings entbindert und danach zu Hartmetall gesintert wird, wobei die spanende Bearbeitung des Grünlings das Schleifen des Grünlings, das Fräsen und/oder das Einbringen von Bohrungen in den Grünling umfasst.

2. Verfahren zur Herstellung eines Werkzeugs oder eines bearbeitungsaktiven Teils (2) eines Werkzeugs nach Anspruch 1, **dadurch gekennzeichnet, dass** nach dem Sintern des Braunlings weitere spanende Bearbeitungen, insbesondere in Form des Schleifens des aus dem Braunling hergestellten Hartmetallteils vorgenommen werden.

3. Verfahren zur Herstellung eines Werkzeugs oder eines bearbeitungsaktiven Teils (2) eines Werkzeugs nach einem der vorhergehenden Ansprüche, **dadurch gekennzeichnet, dass** das aus dem Braunling gesinterte Hartmetallteil vor oder gegebenenfalls nach einer spanenden Bearbeitung mit einer Beschichtung versehen wird.

4. Verfahren zur Herstellung eines Werkzeugs oder eines bearbeitungsaktiven Teils (2) eines Werkzeugs nach einem der vorhergehenden Ansprüche, **dadurch gekennzeichnet, dass** im Rahmen des Urformverfahrens in den Grünling zumindest einseitig an einer hinteren Seite des Werkzeugs oder des bearbeitungsaktiven Teils eines Werkzeugs wenigstens ein offener Hohlraum mit glatter Wandung und/oder mit Innenkonturen eingebracht wird.

5. Verfahren zur Herstellung eines Werkzeugs oder eines bearbeitungsaktiven Teils (2) eines Werkzeugs nach dem vorhergehenden Anspruch, **dadurch gekennzeichnet, dass** das Einbringen des Hohlraums durch einen, in dem Spritzgusswerkzeug vorgesehen und nach dem Spritzgießen ausdrehbaren oder ziehbaren Formkern erfolgt.

6. Verfahren zur Herstellung eines Werkzeugs oder eines bearbeitungsaktiven Teils (2) eines Werkzeugs nach einem der vorhergehenden Ansprüche, **dadurch gekennzeichnet, dass** im Rahmen des Urformverfahrens in den Grünling zumindest ein, sich bis zu einem seitlichen Bereich oder zu einem vorderen Bearbeitungsbereich erstreckender Kanal (6) durch einen in der Spritzgussform vorgesehen Formkern mit nachfolgenden Umspritzen und anschließendem Ziehen oder Herausdrehen des Kerns vor oder beim Entformen des Grünlings aus der Spritzgussform eingebracht wird.

7. Verfahren zur Herstellung eines Werkzeugs oder eines bearbeitungsaktiven Teils (2) eines Werkzeugs nach einem der vorhergehenden Ansprüche, **dadurch gekennzeichnet, dass** im Rahmen des Urformverfahrens in den Grünling zumindest ein, sich bis zu einem seitlichen Bereich oder zu einem vordere Bearbeitungsbereich oder nur in den inneren Bereich des Grünlings erstreckender, röhrchen- oder fadenförmiger Opferkörper eingelegt wird, wobei nach dem Entformen des Grünlings aus dem Spritzgusswerkzeug der Opferkörper im Rahmen des Entbinderns oder des Sinterns des Braunlings aufgelöst und so zur Bildung eines Kanals (6) oder Hohlraums entfernt wird.

8. Verfahren zur Herstellung eines Werkzeugs oder eines bearbeitungsaktiven Teils (2) eines Werkzeugs nach einem der drei vorhergehenden Ansprüche, **dadurch gekennzeichnet, dass** der Kanal (6) eine glatte Wandung oder eine Wandung mit Innenkonturen aufweist.

9. Verfahren zur Herstellung eines Werkzeugs oder eines bearbeitungsaktiven Teils (2) eines Werkzeugs nach einem der vorhergehenden Ansprüche, **dadurch gekennzeichnet, dass** in den Grünling vor dem Entbindern Bohrungen zur Bildung von Kanälen (6), insbesondere von Kühlkanälen, Pressluftkanälen oder Spanabfuhrkanälen, eingebracht werden.

10. Verfahren zur Herstellung eines Werkzeugs unter Anwendung eines Verfahrens eines bearbeitungsaktiven Teils (2) eines Werkzeugs nach einem der vorhergehenden Ansprüche, **dadurch gekennzeichnet, dass** zur Herstellung eines zwei- oder mehrteiligen Werkzeugs ein Schaft (1) aus einem ersten Material, insbesondere einem metallischen Material hergestellt wird und der bearbeitungsaktive Teil (2) des Werkzeugs mit dem Schaft (1) fest oder lösbar verbunden wird.

11. Verfahren zur Herstellung eines Werkzeugs unter Anwendung eines Verfahrens eines bearbeitungsaktiven Teils (2) eines Werkzeugs nach dem vorhergehenden Anspruch, **dadurch gekennzeichnet, dass** der Schaft (1) mit dem bearbeitungsaktiven Teil des Werkzeugs verschraubt wird, wobei hierzu ein Schaft (1) mit einem Innen- bzw. Außengewinde (4) und ein bearbeitungsaktiver Teil (2) des Werkzeugs mit einem Außen- bzw. einem Innengewinde (3) verwendet wird.

12. Verfahren zur Herstellung eines Werkzeugs oder eines bearbeitungsaktiven Teils (2) eines Werkzeugs nach dem vorhergehenden Anspruch, **dadurch gekennzeichnet, dass** die von dem Innengewinde (3) und dem Außengewinde (4) gebildete Gewindepaarung ein Gleitgewinde ist.

13. Verfahren zur Herstellung eines Werkzeugs oder eines bearbeitungsaktiven Teils (2) eines Werkzeugs nach einem der vorhergehenden Ansprüche, **dadurch gekennzeichnet, dass** der Grünling aus Teilgrünlingen zu einem Körper nach dem Spritzgießen zusammengesetzt wird, wobei zunächst zumindest zwei Teilgrünlinge im Spritzgussverfahren hergestellt werden, beide Teilgrünlinge vor dem Entbindern im Grünling-Zustand kraft- und/oder formschlüssig miteinander zu dem Grünling verbunden und anschließend der aus den Teilgrünlingen zusammengefügte Grünling entbindert und gesintert wird und wobei insbesondere ein Teilgrünling den späteren Schaft und ein Teilgrünling den bearbeitungsaktiven Teil des Werkzeugs bilden, die vor dem Entbindern insbesondere durch eine Schraubverbindung miteinander verbunden werden.

14. Werkzeug, **dadurch gekennzeichnet, dass** es nach einem Verfahren nach einem der vorhergehenden Ansprüche hergestellt ist.
